# EUROPÄISCHE PATENTANMELDUNG

(11) **EP 2 111 761 A2**
(43) Veröffentlichungstag der Anmeldung: **28.10.2009**
(21) Anmeldenummer: 09005687.0
(22) Anmeldetag: 23.04.2009
(51) Int. Cl.: A23G 1/21, A23G 3/00

(54) **Einrichtung und Verfahren zur Herstellung von Hohlkörpern aus Lebensmittelmassen**

(30) Priorität: 24.04.2008 DE 102008020698
(71) Anmelder: Bindler, Uwe, 51702 Bergneustadt (DE)
(72) Erfinder: Bindler, Uwe, 51702 Bergneustadt (DE)
(74) Vertreter: Schmidt, Karl Michael

(57) **Zusammenfassung**

Die Erfindung betrifft Einrichtung und Verfahren zur Herstellung von Hohlkörpern aus Lebensmittelmassen, insbesondere Hohlfiguren aus Schokolade, mit einer Halteeinrichtung zur Aufnahme von Hohlformen in welche die Lebensmittelmassen einfüllbar sind, gemäß Oberbegriff der Patentansprüche 1 und 11. Um hierbei zu erreichen, dass die Einrichtung und das Verfahren insgesamt konstruktiv einfacher wird, und dass elektrische Drehdurchführungen gänzlich vermieden werden, ist erfindungsgemäß vorgeschlagen, dass die Halteeinrichtung um eine erste Achse X lediglich um 180° dreh- oder schwenkbar in einem Halterahmen angeordnet ist, und die Halteeinrichtung ihrerseits um eine zur Achse X senkrechte Achse Y beliebig fortlaufend dreh- oder schwenkbar ist.

## Beschreibung

Die Erfindung betrifft eine Einrichtung und ein Verfahren zur Herstellung von Hohlkörpern aus Lebensmittelmassen, insbesondere Hohlfiguren aus Schokolade, mit einer Halteeinrichtung zur Aufnahme von Hohlkörpern in welche die Lebensmittelmassen einfüllbar sind, gemäß Oberbegriff der Patentansprüche 1 und 11.

Bei der Erstellung von Hohlfiguren oder -formen aus Lebensmittelmasse, bspw Schokolagen-Hohlfiguren werden Formen verwendet, die mit flüssiger erwärmter Lebenmittelmasse befüllt werden. Eine Verteilung auf der gesamten Innenoberfläche der Form, sowie eine entsprechende Verfestigung mit einer gewünschten Dicke wird durch das langsame räumliche Drehen und Kühlen der Form bewirkt. Diese Formen entsprechend automatisch zu drehen um ein Fließen und Verfestigen der Lebensmittelmasse auf allen Innenoberflächenpartien in gleichmäßiger Form zu erreichen, wird durch entsprechend angetriebene Halteeinrichtungen bewerkstelligt. Dabei muss im Effekt erreicht werden, dass die Formen quasi gyroskopisch bewegbar sind.

Im Wesentlichen wird dies durch Überlagerung zweier aufeinander senkrecht orientierter Drechachsen erreicht. Dabei soll die Halteeinrichtung, in welcher die Formen befestigt werden, über Drehachsen bewegt werden, wobei jede für sich antreibbar ist. Die Überlagerung beider Drehbewegungen erreicht dann im Effekt, dass allein durch Einwirkung der Schwerkraft die im Raum gedrehte Form an allen Partien der Innenoberfläche von der sich nach und nach verfestigenden Lebensmittelmasse bedeckt wird, und so einen geschlossen und aus der Form anschließend vereinzelbaren Hohlkörper bildet. Während der Bewegung wird zur Beschleunigung der Verfestigung der an den Innenwänden der Form anhaftenden Lebensmittelmasse gleichzeitig von außen gekühlt.

Ein Beispiel für die Realisierung einer solchen Bewegung der Formen ist aus der DE 102 34 770 B3 bekannt. Dabei wird eine Haltereinrichtung, auf welcher die Formen zu Einfüllen der Lebensmittelmasse angeordnet ist, zwischen zwei zeitweise gegenläufig angetriebenen Rädern platziert. Bei synchroner Bewegung der Räder wird die Halteeinrichtung und damit die Form um eine erste Raumachse gedreht. Bei gegenläufiger Bewegung der Räder erfolgt eine überlagerte Bewegung um eine zur ersten Raumachse senkrechte Raumachse. Die damit bewirkte resultierenden Bewegungsabläufe lassen automatisch die Lebensmittelmasse die gesamte Innenwandung der Form bedecken. Dabei ist aber über die genannten komplizierten Getriebemittel diese Einrichtung aufwändig.

Ferner besteht ein weiterer Nachteil darin, dass die Räder Bewegungen um 360° bzw x-mal 360° ausführen. Mitgeführte Antriebsmotoren auf der Haltereinrichtung müssen daher aufwändig mit elektrischen Drehdurchführungen versehen sein, weil Kabel verdrillen und reissen würden.
Auch dies ist aufwändig.

Der Erfindung liegt daher die Aufgabe zugrunde, eine Einrichtung sowie ein Verfahren der gattungsgemäßen Art dahingehend weiterzuentwickeln, dass die Einrichtung und das Verfahren insgesamt konstruktiv einfacher wird, und dass elektrische Drehdurchführungen gänzlich vermieden werden.

Die gestellte Aufgabe ist bei einer Einrichtung der gattungsgemäßen Art erfindungsgemäß durch die kennzeichnenden Merkmale des Anspruches 1 gelöst.

Weitere vorteilhafte einrichtungsgemäße Ausgestaltungen sind in den abhängigen Ansprüchen 2 bis 10 dargelegt.

Im Hinblick auf ein Verfahren ist die Aufgabe erfindungsgemäß durch die kennzeichnenden Merkmale des Anspruches 11 gelöst.

Weitere vorteilhafte Ausgestaltungen sind in den übrigen Ansprüchen angegeben.

Kern der einrichtungsgemäßen Erfindung ist, dass die Halteeinrichtung um eine erste Achse X lediglich um 180° dreh- oder schwenkbar in einem Halterahmen angeordnet ist, und die Halteeinrichtung ihrerseits um eine zur Achse X senkrechte Achse Y beliebig dreh- oder schwenkbar ist.

Es kommt somit nicht mehr zu einer fortlaufenden Rotationsbewegung des äußeren Halterahmens, wodurch die Vorsehung elektrischer Drehdurchführungen für mitgeführte Antriebsmotoren gänzlich vermieden ist. Die Lediglich nur noch ausgeführten reversierenden Dreh- und/oder Verschwenkbewegung um die X-Achse hat weiterhin den Vorteil dass die Einrichtung kompakter und einfacher wird.
In weiterer vorteilhafter Ausgestaltung ist daher vorgesehen, dass die Drehung/Verschwenkung des Halterahmens um die Achse X zwischen zwei Umkehrpunkten (X₁, X₂) reversiert. Dass heisst, dass der Halterahmen auf dem die Halteeinrichtung montiert ist, keine Volldrehung oder mehrfache Volldrehung mehr ausführt, sondern eine reversierende Bewegung jeweils nur um 180° und zurück. Die Umkehrpunkte sind dabei konstruktiv zu definieren.

Weiterhin ist vorteilhaft ausgestaltet, dass der nach unten und oben über die 180° dreh- oder schwenkbare Halterahmen mit einem auf dem Halterahmen angeordneten Antriebsmittel versehen ist, über welchen die Halteeinrichtung unabhängig von der Halterahmenbewegung drehbar ist. Dieses Antriebsmittel führt eine fortwährende Drehbewegung der auf dem Halterahmen angeordneten Halteeinrichtung um die besagte Y-Achse aus, und zwar während der gleichzeitigen Drehbewegung des Halterahmens um die X-Achse als auch in den Verweilzeiten der Drehung des Halterahmens um die X-Achse. Während der Verweilzeit des Halterahmens an den Umkehrpunkten dreht die über den Antriebsmotor angetriebene um die Y-Achse rotierende Halteeinrichtung weiter. Während der Drehung des Halterahmens um die X-Achse wird die Y-Achse im Raum Verschwenkt.
Die Verweilzeit an den Haltepunkten dauert dabei solange, bis die gleichzeitig fortwährende Drehung der Halteeinrichtung um die Y-Achse wieder eine Teildrehung um 180° vollzogen hat. Dann reversiert der Halterahmen wieder um die X-Achse zurück zum anderen Haltepunkt. Die in räumlicher Betrachtung damit erreichte räumliche Drehung der Form in Form einer räumlichen Taumelbewegung ist so ausgelegt, dass über die Erdanziehung die noch fließfähige Lebensmittelmasse die gesamte Innenoberfläche bedeckt.

Zunächst ist weiter ausgestaltet, dass der Halterahmen u-förmig ausgestaltet ist, wobei die Lagerung desselben an den offenen Schenkelenden platziert ist, durch welche auch die gedachte Dreh- oder Schwenkachse X hindurch verläuft. Durch den U-formigen Halterahmen und die reversierende Bewegung nur um 180° und zurück, d.h. zwischen den Halte- bzw Umkehrpunkten, ist es möglich, dass aus der Drehbewegung um die Achse X eine Verschwenkbewegung wird.

In weiterer vorteilhafter Ausgestaltung ist angegeben, dass die Bewegungen der Achsen über den Halterahmen und eine Antriebssteuerung oder über Getriebemittel derart gekoppelt bzw koordiniert sind, dass wenn der Halterahmen jeweils einen der Haltepunkte X₁ oder X₂ erreicht, der Halterahmen für eine Verweilzeit anhält, solange bis die kontinuierlich um die Y-Achse drehende Halteeinrichtung eine Teildrehung um 180° vollzogen hat, und sodann der Halterahmen wieder die reversierende Bewegung um die X-Achse startet. Die Halteeinrichtung, auf welcher die mit Lebensmittelmasse füllbare Form fixiert wird, ist bspw über einen am Halterahmen angeordneten Antriebsmotor mit Getriebe kontinuierlich drehbar um die zur X-Achse senkrecht stehende Y-Achse.

Die Erdanziehung bewirkt dann bei der neu positionierten Form auf der Halteeinrrichtung, dass die Lebensmittelmasse sich auf der Innenoberfläche der Form gleichmäßig verteilt.

Typischerweise werden Zeiten von 4 bis 6 Minuten für die Drehungen erreicht. Nur diese langsamen Bewegungen ermöglichen eine gleichförmige Verteilung und eine Verfestigung bspw der Schokoladenmasse zu einem homogenen Hohlkörper.

In weiterer vorteilhafter Ausgestaltung ist daher angegeben, dass die Achse X exzentrisch zur Halterahmen und somit auch zur Halteeinrichtung verläuft, während dem die Achse Y durch die Halteinrichtung verläuft.

In weiterer vorteilhafter Ausgestaltung ist angegeben, dass die Einrichtung auf einem Tragrahmen angeordnet ist, welcher wiederum auf einer transportablen Palette angeordnet ist. Dies hat den Vorteil, dass die Einrichtung auch in einer großtechnischen Produktionsanlage eingesetzt werden kann.

Diesbezüglich ist weiter ausgestaltet, dass der Tragrahmen oder die Palette auf einer lineraren Fördereinrichtung platziert ist.

Eine produktionstechnische Alternative ist, dass der Tragrahmen oder die Palette auf einer ringbahnförmigen Fördereinrichtung platziert ist.

In weiterer Ausgestaltung ist angegeben, dass der Tragrahmen der Einrichtung oder der Halterahmen direkt in einer einseitig beladbaren Kühleinrichtung angeordnet ist. Dies stellt eine kompakte Einzellösung dar, bspw für Konditoreien etc. Aufgrund der Tatsache, dass die entsprechende Drehung des Halterahmens nur noch um 180° erfolgt und nicht mehr die Volldrehung mit erfasst, erlaubt, dass die Einrichtung nicht mehr frei im Raum platziert werden muss, sondern einseitig an einer Wand platziert werden kann, weil die Einrichtung somit dann nur noch von einer Seite be- und entladbar sein muss.

Im Hinblick auf ein Verfahren besteht der Kern der Erfindung darin, dass die Halteeinrichtung um eine erste Achse X lediglich um 180° in einem Halterahmen gedreht oder verwenkt wird, und die Halteeinrichtung mitsamt der Form ihrerseits jedoch simultan eine kontunierliche Drehung um die Y-Achse vollzieht.
Trotz der nur 180°-Drehung um die X-Achse wird die Form dennoch um alle Raumwinkel so gedreht, dass durch die Schwerkraft die Lebensmittelmasse die gesamte räumliche Innenoberfläche der Form des Hohlkörpers erreicht und dort verfestigt.

In weiterer vorteilhafter Ausgestaltung ist angegeben, dass die Drehung/Verschwenkung des Halterahmens um die Achse X an den zwei Umkehrpunkten (X₁, X₂) jeweils verweilt, solange bis die kontinuierlich um die Y-Achse drehende Halteeinrichtung eine Teildrehung um 180° vollzogen hat, und sodann die reversierende 180°-Drehung/Verschwenkung des Haltrahmens um die X-Achse bis zum anderen Haltepunkt vollzieht, und dort wieder verweilt während auch dort wiederum die kontinuierlich um die Y-Achse drehende Halteeinrichtung eine Teildrehung um um 180° vollzogen hat, usw.
Dies gewährleistet die notwendigen resultierenden räumlichen Drehungen der Form, damit die gesamte Innenoberfläche bedeckt wird.

In weiterer vorteilhafter Ausgestaltung ist angegeben, dass eine Mehrzahl von Einrichtungen der genannten Art als Material- und Zeitspeicher durch den Raum einer Fabrikationshalle zwischen Einfüllung von Lebensmittelmasse und Vereinzelung von erhaltenen Hohlkörpern derart bewegt oder verschoben wird, dass die Verschiebe- oder Bewegungszeit **Tₜ** kleiner oder gleich der Verfestigungszeit **T_{f}** der Lebensmittelmasse ist. Auf diese Weise wird erreicht, dass die vorteilhafte erfindungsgemäße Einrichtung, die nach dem erfindungsgemäßen Verfahren betrieben wird, bezüglich seiner notwendigen Zeit für das Drehen und Verfestigen der so verteilten Lebensmittelmasse, die notwendigen Drehzeiten und die logistischen und produktionstechnischen Transportzeiten der Einrichtung koinzident gemacht werden. So läuft die Verfestigung sowie die Zwischenspeicherung von fertig produzierten Lebenmittelhohlkörpern simultan und optimiert damit den Produktionsprozess zeitlich.

In letzter vorteilhafter Ausgestaltung ist angegeben, dass die Verfestigungszeit zusätzlich um eine Nachkühlzeit T_{f_kühl} erweitert wird, so dass sich ergibt Tₜ = T_{f} + T_{f_kühl} .
Dabei wird die nach der Verfestigung notwendige Ruhe oder Nachkühlzeit mit ins steuerungstechnische Zeitmanagement des oben genannten Prozesses mit einbezogen.

Die Erfindung ist in der Zeichnung dargestellt und nachfolgend näher erläutert.

Es zeigt:
Figur 1: perspektivische Darstellung
Figur 2: transparente Darstellung
Figur 3: Bewegungsablauf

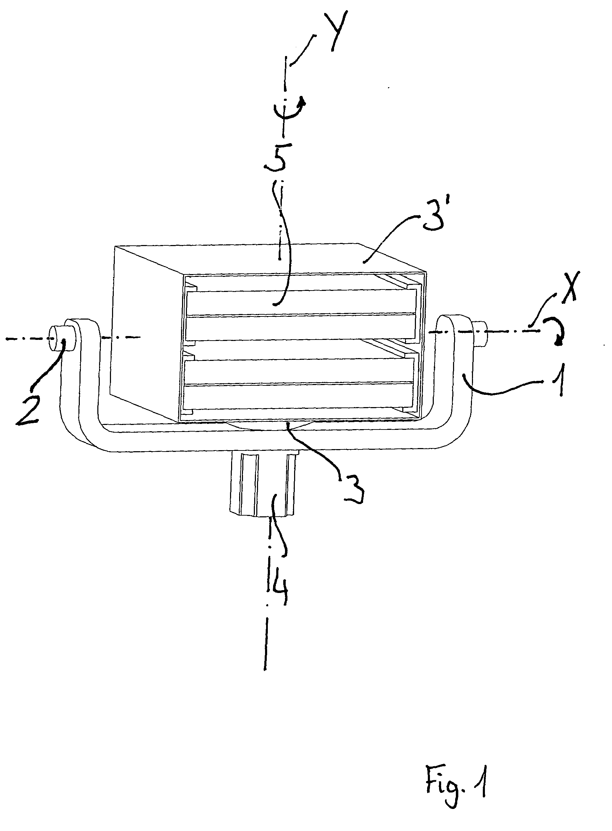

Figur 1 zeigt eine perspektivische Darstellung nur der wichtigsten Teile der Einrichtung, die die erfindungsgemäße Bewegung ermöglichen. Auf einem u-förmigen Halterahmen 1 ist die Halteeinrichtung 3 nach Art eines drebaren Tellers angeordnet. Die Drehachse X des Halterahmens 1 liegt weitestgehend horizontal. Darauf senkrecht steht die Drehachse Y der Halteeinrichtung. Die Drehung des Halterahmens um die Achse X wird von außen über die Lagerung 2 des Halterahmens eingeleitet bspw motorisch direkt oder durch ein dort effektiv eingreifendes, hier nicht weiter dargestelltes Getriebe. Die darauf senkrecht stehende Drehachse Y wird über einen auf dem Halterahmen 1 angeordneten Antriebsmotor oder Getriebemotor 4 gebildet, die die Halteeinrichtung 3 um die Achse Y bewegt. Dabei ist die Bewegung der Halteeinrichtung 3, 3' um die Y-Achse winkelmäßig nicht limitiert, das heisst es wird im Betrieb die Halteeinrichtung 3, 3' samt Formen kontinuierlich um die Y-Achse gedreht.

Demgegenüber ist die Drehung des Halterahmens 1 um die X-Achse zum einen eine reversierende Drehung und zum anderen nur um 180°.
Dies ist wesentliches Merkmal der Erfindung, nämlich genau diese Koordination der Bewegungen miteinander. Im Ablauf ist dies so, dass Figur 1 den Halterahmen 1 in der oberen Grenzlage, d.h am oberen Haltepunkt X1 zeigt. Dort hält der Halterahmen 1 für eine Verweilzeit an, die benötigt wird, dass die Drehung der Halteeinrichtung 3 , 3' samt Formen 5 um die Y-Achse eine Teildrehung um 180° vollzogen hat. Ist dies der Fall, dann reversiert die Halterahmenbewegung um die X-Achse wieder zurück nach unten, d.h. also um 180°, während auch dabei die Halteeinrichtung 3, 3' samt Formen kontinuierlich weiterdreht.

Es werden also folgende Bewegungsabläufe strikt eingehalten:
- Bewegung um die X-Achse ist diskontinuierlich und zwischen den Haltenpunkten X1 und X2 um nur 180° reversierend.
- Reversierende Bewegung um die X-Achse, also jeweils vor dem Reversieren verharrt diese um eine definierte Verweilzeit.
- Verweilzeit bei der Bewegung um die X-Achse ist so bemessen, dass die kontinuierliche Bewegung um die Y-Achse einen Teilwinkel von 180° während dieser Verweilzeit durchfahren kann.
- Bewegung um die X-Achse reversiert dann, wenn die 180° der kontinuierlichen Drehung um Y gerade vollzogen sind.

Durch die Reversierung statt Volldrehung um X wird eine kompakte Bauform erreicht. Durch die Verweilzeit und die beschriebenen Bewegungsabläufe um die Y-Achse wird eine räumlich effektive Vollraumwinkeldrehung der Formen 5 bewirkt.

Ein weiterer Vorteil ergibt sich indirekt aus der reversierenden Drehung um die X-Achse.
Da die Bewegung um die X-Achse nur eine Teildrehung ist, und diese auch noch reversiert, also immer zwischen 0°-180° und 180°- 0° erfolgt, also nicht von 180° weiter bis 360° dreht, benötigt man für den auf dem Halterahmen 1 angeordneten Antriebsmotor 4 für die Y-Achse von außen keine elektrischen Drehdurchführungen mehr. Stattdessen können einfache Kabel verwendet werden. Kabel können dabei so gelegt werden, dass diese immer nur um 180° verdrillt aber sodann wieder zurückgedrillt werden bei der reversierenden Bewegung.

Die Drehzeiten liegen bei ca 4 bis 6 Minuten insgesamt. Beispielsweise bei Schokolade als Lebensmittelmasse. In der Nachkühlzeit erfolgt keine Drehung.

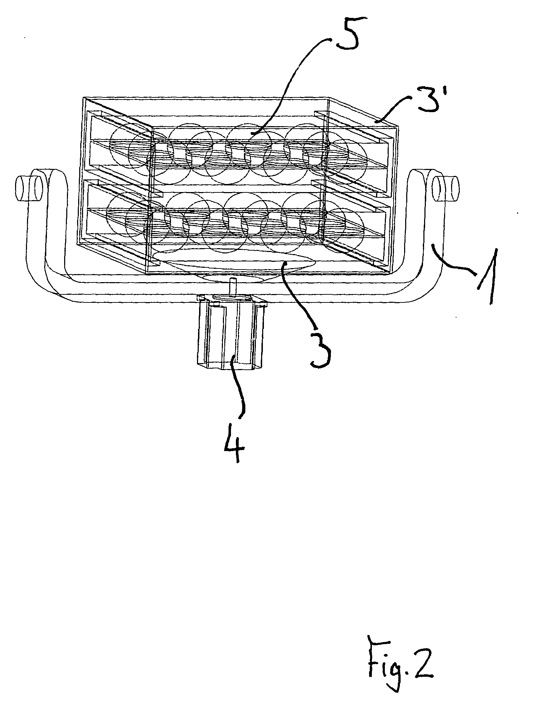

Figur 2 zeigt eine durchsichtige Anordnung gemäß Figur 1. Dabei sind kugelförmige Formen 5 für die Hohlkörper hierbei sichtbar, nämlich dass diese in dem Halteteil 3' der Halteeinrichtung 3 fixiert sind.

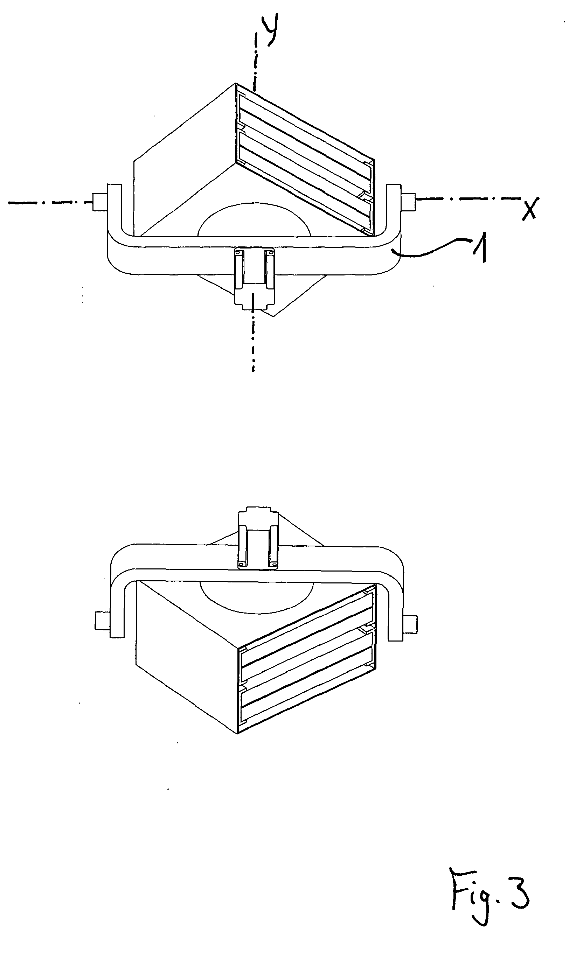

Figur 3 zeigt zwei Momentaufnahmen der kombinierte Drehbewegung um die X-Achse und die Y-Achse. Dadurch dass der Halterahmen 1 u-förmig ist, die Lagerung an den Schenkelenden und die Halteeinrichtung 3 an der tiefsten Stelle des u-förmigen Halterahmens 1 platziert ist, bewirkt bei der Drehung um die X-Achse eher eine Verschwenkbewegung als eine Drehbewegung.

Dadurch kann das Gerät in einem Kühlgehäuse untergebracht werden, was ausschließlich nur noch von vorne be- und entladen werden muss. So kann in einer Ausführung ein kompaktes an eine Wand stellbares Gerät für die Kleinanwendung realisiert werden.

Für die großindustrielle Anwendung sind Einrichtungen dieser Art auf jeweils einem Tragrahmen befestigt der wiederum auf einer Transportpalette angeordnet. Dadurch entsteht eine produktionstechnische Produktions- und Förderanlage, die am Ende die fertigen Schokoladenhohlkörper zur Verfügung stellt.

### Bezugszeichen:

- 1: Halterahmen
- 2: Lager
- 3: Halteeinrichtung
- 3': Teil der Halteeinrichtung zur Aufnahme der Formen
- 4: Antriebsmotor
- 5: Formen

- X: Drehachse des Halterahmens
- Y: Drehachse der Halteeinrichtung

## Patentansprüche

1. Einrichtung Herstellung von Hohlkörpern aus Lebensmittelmasse, insbesondere Hohlfiguren auis Schokolade, mit einer Halteeinrichtung zur Aufnahme von Hohlformen, in welche die Lebensmittelmasse einfüllbar ist, wobei die Halteeinrichtung mindestens über 2 senkrecht aufeinander stehende Achsen im Raum bewegbar ist,
**dadurch gekennzeichnet,**
**dass** die Halteeinrichtung (3,3') um eine erste Achse X lediglich um 180° dreh- oder schwenkbar in einem Halterahmen (1) angeordnet ist, und die Halteeinrichtung (3,3') ihrerseits um eine zur Achse X senkrechte Achse Y beliebig/fortlaufend dreh- oder schwenkbar ist.

2. Einrichtung nach Anspruch 1,
**dadurch gekennzeichnet,**
**dass** die Drehung/Verschwenkung des Halterahmens (1) um die Achse X zwischen zwei Umkehrpunkten (X₁, X₂) reversiert.

3. Einrichtung nach Anspruch 1 oder 2,
**dadurch gekennzeichnet,**
**dass** der Halterahmen (1) u-förmig ausgestaltet ist, wobei die Lagerung (2) desselben an den offenen Schenkelenden platziert ist, durch welche auch die gedachte Dreh- oder Schwenkachse X hindurch verläuft.

4. Einrichtung nach einem der vorhergehnden Ansprüche,
**dadurch gekennzeichnet,**
**dass** der nach unten und oben über die 180° drehoder schwenkbare Halterahmen (1) mit einem auf dem Halterahmen (1) angeordneten Antriebsmittel (4) versehen ist, über welchen die Halteeinrichtung (3,3') unabhängig von der Halterahmenbewegung drehbar ist.

5. Einrichtung nach einem der vorhergehenden Ansprüche,
**dadurch gekennzeichnet,**
**dass** die Bewegungen der Achsen (X, Y) über den Halterahmen (1) und eine Antriebssteuerung oder über Getriebemittel derart gekoppelt bzw koordiniert sind, dass wenn der Halterahmen (1) jeweils einen der Haltepunkte X₁ oder X₂ erreicht, der Halterahmen (1) für eine Verweilzeit anhält, solange bis die kontinuierlich um die Y-Achse drehende Halteeinrichtung (3,3') eine Teildrehung um 180° vollzogen hat, und sodann der Halterahmen (1) wieder die reversierende Bewegung um die X-Achse startet.

6. Einrichtung nach einem der vorhergehenden Ansprüche,
**dadurch gekennzeichnet,**
**dass** die Achse X exzentrisch zur Halteeinrichtung (3,3') verläuft, während dem die Achse Y durch die Halteinrichtung (3,3') verlauft.

7. Einrichtung nach einem der vorhergehenden Ansprüche,
**dadurch gekennzeichnet,**
**dass** die Einrichtung auf einem Tragrahmen angeordnet ist, welcher wiederum auf einer transportablen Palette angeordnet ist.

8. Einrichtung nach Anspruch 7,
**dadurch gekennzeichnet,**
**dass** der Tragrahmen oder die Palette auf einer lineraren Fördereinrichtung platziert ist.

9. Einrichtung nach Anspruch 7,
**dadurch gekennzeichnet,**
**dass** der Tragrahmen oder die Palette auf einer ringbahnförmigen Fördereinrichtung platziert ist.

10. Einrichtung nach einem der vorhergehenden Ansprüche,
**dadurch gekennzeichnet,**
**dass** der Tragrahmen der Einrichtung oder der Halterahmen direkt in einer einseitig beladbaren Kühleinrichtung angeordnet ist.

11. Verfahren zur Herstellung von Hohlkörpern aus Lebensmittelmasse, insbesondere Hohlfiguren aus Schokolade, mit einer Halteeinrichtung zur Aufnahme von Hohlformen, in welche die Lebensmittelmasse eingefüllt wird, wobei die Halteeinrichtung mindestens über 2 senkrecht aufeinander stehende Achsen im Raum bewegt wird,
**dadurch gekennzeichnet,**
**dass** die Halteeinrichtung um eine erste Achse X lediglich um 180° in einem Halterahmen gedreht oder verwenkt wird, und die Halteeinrichtung mitsamt der Form ihrerseits jedoch simultan eine kontunierliche Drehung um die Y-Achse vollzieht.

12. Verfahren nach Anspruch 10,
**dadurch gekennzeichnet,**
**dass** die Drehung/Verschwenkung des Halterahmens um die Achse X an den zwei Umkehrpunkten (X₁, X₂) jeweils verweilt, solange bis die kontinuierlich um die Y-Achse drehende Halteeinrichtung eine Teildrehung um 180° vollzogen hat, und sodann die reversierende 180°-Drehung/Verschwenkung des Haltrahmens um die X-Achse bis zum anderen Haltepunkt vollzieht, und dort wieder verweilt während auch dort wiederum die kontinuierlich um die Y-Achse drehende Halteeinrichtung eine Teildrehungum um 180° vollzogen hat, usw.

13. Verfahren nach einem der Ansprüche 10 bis 13,
**dadurch gekennzeichnet,**
**dass** eine Mehrzahl von Einrichtungen der genannten Art als Material- und Zeitspeicher durch den Raum einer Fabrikationshalle zwischen Einfüllung von Lebensmittelmasse und Vereinzelung von erhaltenen Hohlkörpern derart bewegt oder verschoben wird, dass die Verschiebe- oder Bewegungszeit **Tₜ** kleiner oder gleich der Verfestigungszeit **T_{f}** der Lebensmittelmasse ist.

14. Verfahren nach Anspruch 14,
**dadurch gekennzeichnet,**
**dass** die Verfestigungszeit zusätzlich um eine Nachkühlzeit T_{f_kühl} erweitert wird, so dass sich ergibt Tₜ = T_{f} + T_{f_kühl} .
